# EUROPÄISCHE PATENTANMELDUNG

(11) **EP 4 478 573 A1**
(43) Veröffentlichungstag der Anmeldung: **18.12.2024**
(21) Anmeldenummer: 24181783.2
(22) Anmeldetag: 12.06.2024
(51) Int. Cl.: H02J 3/30, H02J 3/38, H02J 7/00, H02J 13/00, H02J 3/32

(54) **STROMSPEICHER-SYSTEM UND VERFAHREN ZUM BETRIEB EINES STROMSPEICHER-SYSTEMS**

(30) Priorität: 13.06.2023 DE 102023115405; 01.09.2023 DE 102023123663
(71) Anmelder: Sorge, Nico, 06118 Halle (DE)
(72) Erfinder: Sorge, Nico, 06118 Halle (DE)
(74) Vertreter: Dantz, Dirk

(57) **Zusammenfassung**

Die Erfindung betrifft ein Stromspeicher-System zur Einspeisung von elektrischer Leistung in ein Haushaltsstromnetz und ein Verfahren zum Betrieb eines Stromspeicher-Systems zur Einspeisung von elektrischer Leistung in ein Haushaltsstromnetz umfassend einen Wechselrichter, einen Anschlussstecker, eine Stromleistungsmesseinheit und eine Steuerung, wobei die Stromleistungsmesseinheit dafür vorgesehen und dafür geeignet ist, den gesamten Stromleistungsverbrauch und/oder den vollständigen Stromleistungsbedarf des Haushaltes zu ermitteln.

## Beschreibung

Die Erfindung betrifft ein Stromspeicher-System zur Einspeisung von elektrischer Leistung in ein Haushaltsstromnetz und ein Verfahren zum Betrieb eines Stromspeicher-Systems zur Einspeisung von elektrischer Leistung in ein Haushaltsstromnetz umfassend einen Wechselrichter, einen Anschlussstecker, eine Stromleistungsmesseinheit und eine Steuerung, wobei die Stromleistungsmesseinheit dafür vorgesehen und dafür geeignet ist, den gesamten Stromleistungsverbrauch und/oder den vollständigen Stromleistungsbedarf des Haushaltes zu ermitteln.

### Stand der Technik

Wiederaufladbare Stromspeicher-Systeme werden in Haushalten derzeit häufig in Kombination mit Steckersolargeräten eingesetzt, um überschüssig erzeugte elektrische Leistung, die der Haushalt nicht sofort verbraucht, im Stromspeicher-System zu speichern. Aus dem Stromspeicher-System wird die elektrische Energie z.B. während der Nachtstunden wieder entnommen und in das Haushaltsstromnetzwerk eingespeist.

Die Kombination von Steckersolargerät mit einem Akku ist bekannt. Bei diesen Steckersolargeräten wird allerdings die von den Solarpanels erzeugte elektrische Leistung von maximal beispielsweise derzeit 600 Watt in das Haushaltsstromnetzwerk eingespeist, überschüssig erzeugte elektrische Leistung wird in den Akku gespeist, der wiederum nachts und bei geringer Sonneneinstrahlung die gespeicherte elektrische Leistung in das Hausnetz einspeist. Es werden also lediglich Überschüsse des Steckersolargerätes gespeichert, die bei Bedarf aus dem Akku wieder abgegeben werden.

Ein Beispiel zeigt die Schrift CN 216215920 U: Das Steckersolargerät kann Strom zusammen mit kommerziellem Strom in einem Vernetzungsmodus liefern, das Steckersolargerät wird direkt an eine Last zur Verwendung unter den Bedingungen der Beleuchtung am Tag geliefert, das Steckersolargerät kann durch den kommerziellen Strom oder eine Batterie ergänzt werden, wenn die photovoltaische Stromversorgung unzureichend ist. Überschüssige elektrische Energie wird in die Batterie für den Standby-Betrieb geladen, nachdem die photovoltaische Stromerzeugung für die Last verwendet wurde, die elektrische Menge der Batterie und des kommerziellen Stroms werden für die Stromversorgung der Last zur gleichen Zeit in der Nacht verwendet, ein Teil der elektrischen Menge wird in der Batterie für die Notstromversorgung reserviert, und die Notstromversorgung von teilweisen kleinen Lasten wie Beleuchtung wird für die Bewohner bereitgestellt, nachdem der kommerzielle Strom abgeschaltet wurde.

Dieses vorgestellte Steckersolargerät weist den Nachteil auf, dass zum Aufladen des elektrischen Energiespeichers sowohl die vom Steckersolargerät erzeugte elektrische Leistung als auch Strom aus dem öffentlichen Stromnetz verwendet wird. Dieses System ist vorrangig für die Notstromversorgung z.B. für Büroeinrichtungen und Haushalte geeignet.

### Aufgabe

Es ist daher Aufgabe der vorliegenden Erfindung, ein Verfahren zum Betrieb eines Stromspeicher-Systems zur Einspeisung von elektrischer Leistung in ein Haushaltsstromnetz bereitzustellen, mit dem die Eigennutzung der gespeicherten elektrischen Leistung optimiert wird.

Es ist ebenfalls Aufgabe der vorliegenden Erfindung, ein Stromspeicher-System zur Einspeisung von elektrischer Leistung in ein Haushaltsstromnetz bereitzustellen, mit dem die Eigennutzung der gespeicherten elektrischen Leistung optimiert wird.

Die Aufgabe wird mittels des erfindungsgemäßen Verfahrens zum Betrieb eines Stromspeicher-Systems zur Einspeisung von elektrischer Leistung in ein Haushaltsstromnetz gemäß Anspruch 1 gelöst. Weitere vorteilhafte Ausführungen der Erfindung sind in den Unteransprüchen dargelegt.

Das erfindungsgemäße Verfahren zum Betrieb eines Stromspeicher-Systems zur Einspeisung von elektrischer Leistung in ein Haushaltsstromnetz weist drei Verfahrensschritte auf: Im ersten Verfahrensschritt erfolgt ein Speichern einer Stromleistung in einer Stromspeicher-Einheit. Das Speichern der elektrischen Leistung erfolgt optional so lange, bis die Stromspeicher-Einheit vollständig geladen ist.

Im zweiten Verfahrensschritt erfolgt ein Messen der aktuellen Bezugs- und/oder des Verbrauchsstromleistung des Haushaltstromnetzes. Während des Betriebes des Stromspeicher-Systems erfasst eine Stromleistungsmesseinheit mittels eines Stromleistungsmessgerätes die aktuelle und vollständige Bezugs- und/oder Verbrauchsstromleistung des Haushaltstromnetzes aller im Haushaltstromnetz befindlichen Stromverbraucher. Die Erfassung der Bezugs- und/oder der Verbrauchsstromleistung erfolgt fortlaufend in einem einstellbaren Takt, z.B. 1 Sekunde.

Im dritten Verfahrensschritt erfolgt ein Einspeisen einer Stromleistung aus der Stromspeicher-Einheit über einen Wechselrichter. Erfindungsgemäß ist die Menge der eingespeisten Stromleistung korrespondierend zu der gemessenen Bezug- und/oder Verbrauchsstromleistung. Auf Grundlage der erfassten Bezugs- und/oder der Verbrauchsstromleistung des Haushaltstromnetzes die Stromspeicher-Einheit wird eine derartige Stromleistung als Gleichstrom an den Wechselrichter abgegeben, dass die Bezugs- und/oder die Verbrauchsstromleistung des Haushaltstromnetzes vollständig gedeckt ist. Der Wechselrichter wandelt den Gleichstrom der Stromspeicher-Einheit in einen Wechselstrom (in Deutschland mit 230V) um, über einen mit dem Wechselrichter verbundenen Anschlussstecker wird der Wechselstrom in die Standardhaushaltssteckdose des Haushaltsstromnetzes eingespeist.

Dadurch wird erreicht, dass so lange elektrische Energie aus der Stromspeicher-Einheit in das Haushaltstromnetz eingespeist wird, wie die Stromspeicher-Einheit über elektrische Energie verfügt.

Die elektrische Leistung ist dabei dem Verbrauch der elektrischen Leistung des Haushaltsstromnetzes angepasst, d.h. es wird maximal nur so viel elektrische Leistung von der Stromspeicher-Einheit in das Haushaltstromnetz eingespeist, wie auch tatsächlich verbraucht wird. Damit ist sichergestellt, dass der Bedarf von elektrischer Leistung des Haushaltstromnetzes gedeckt ist, gleichzeitig möglichst wenig elektrische Leistung aus dem öffentlichen Stromnetz in das Haushaltstromnetz eingespeist wird.

In einer Weiterbildung der Erfindung wird die aktuelle Bezug- und oder Verbrauchsstromleistung mit einer Stromleistungsmesseinheit gemessen. In einer weiteren Ausführung der Erfindung weist die Stromleistungsmesseinheit mehrere Stromleistungsmessgeräte auf. Jedes der Stromleistungsmessgeräte ist optional an einem unterschiedlichen Ort des Haushaltsstromnetzes angeordnet. Damit ist die kontinuierliche Erfassung des Stromleistungsverbrauchs und/oder des vollständigen Stromleistungsbedarfs in einstellbaren Zeitintervallen des Haushaltsstromnetzes möglich. Das Stromleistungsmessgerät misst kontinuierlich in einem Haushaltsstromnetz den fließenden elektrischen Strom und dessen elektrische Spannung und ermittelt daraus die im Haushaltsstromnetz befindliche elektrische Leistung. Stromleistungsmessgerät ist z.B. als Rogowski-Spule, Zangenamperemeter, Induktionsklemme oder gleichwirkende Vorrichtung ausgebildet.

In einer weiteren Gestaltung der Erfindung ist die Stromleistungsmesseinheit derart mit einem Haushaltsstromnetz verbunden und/oder gekoppelt, dass mit einem Stromleistungsmessgerät der Stromleistungsmesseinheit der vollständige Stromleistungsverbrauch des Haushaltes und/oder den vollständige Stromleistungsbedarf des Haushaltes erfassbar ist. In einer vorteilhaften Ausbildung der Erfindung ist das Stromleistungsmessgerät an einem Stromzähler und/oder zwischen dem Stromzähler und einer Sicherung des Haushaltsstromnetzes zur Erfassung des Stromleistungsverbrauchs und/oder des Stromleistungsbedarfs des Haushaltsstromnetzes angeordnet. Damit ist die kontinuierliche Erfassung des Stromleistungsverbrauchs und/oder des vollständigen Stromleistungsbedarfs in einstellbaren Zeitintervallen möglich. Die Anordnung des Stromleistungsmessgerätes über eine Schnittstelle des Stromzählers im Haushaltsnetz erfordert keine Installation des Stromleistungsmessgerätes durch Fachleute und ist daher auch von einem Nutzer einfach und zuverlässig durchführbar. Optional kann ein Stromleistungsmessgerätes zwischen dem Stromzähler und einer Sicherung des Haushaltsstromnetzes angeordnet werden. Hiermit ist die im Haushaltsnetz verbrauchte elektrische Leistung ermittelbar. Dies hat den Vorteil, dass der Verbrauch der elektrischen Leistung über einen bereits geeichten Zähler ermittelt wird.

In einer Weiterbildung der Erfindung wird der Stromleistungsverbrauch und/oder den vollständigen Stromleistungsbedarf des Haushaltes in Zeitintervallen wiederholt ermittelt. Die eingespeiste Stromleistung korrespondiert dann zum jeweils aktuell ermittelten Stromleistungsverbrauch und/oder dem vollständigen Stromleistungsbedarf des Haushaltes. In einer optionalen Ausführungsform der Erfindung ist das Zeitintervall kleinergleich 2s, bevorzugt kleinergleich 1s besonders bevorzugt kleinergleich 0,5s und insbesondere bevorzugt kleiner gleich 0,3s. Dies hat den Vorteil, dass schnell auf veränderten Stromleistungsverbrauch und/oder den vollständigen Stromleistungsbedarf des Haushaltes reagiert werden kann.

In einer Weiterbildung der Erfindung erfolgt eine Anpassung der eingespeisten Stromleistung in das Haushaltsstromnetz innerhalb von weniger als 2s, bevorzugt weniger al 1s, besonders bevorzugt weniger als 0,5s und insbesondere bevorzugt innerhalb weniger als 0,3s. Dies hat den Vorteil, dass schnell auf veränderten Stromleistungsverbrauch und/oder den vollständigen Stromleistungsbedarf des Haushaltes reagiert werden kann.

In einer weiteren Ausgestaltung der Erfindung ist die maximale Ausgangsleistung eP des Wechselrichters kleiner als die Peak-Leistung pvP der eingespeicherten Stromleistung.

Die eingespeicherte Stromleistung im Sinne dieser Schrift ist die elektrische Stromleistung, mit der elektrische Stromleistung in die Stromspeicher-Einheit eingespeist und in der Stromspeicher-Einheit gespeichert wird. Die eingespeicherte Stromleistung kann z.B. durch ein öffentliches Stromnetzwerk bereitgestellt werden. Ein Nutzer kann damit in Zeitintervallen elektrische Energie einkaufen und im Stromspeicher-System speichern, in denen die elektrische Energie preiswert ist. Die gespeicherte elektrische Energie kann dann z.B. in Zeiten hoher Energiepreise oder in Verbrauchsspitzenzeiten wieder aus der Stromspeicher-Einheit in das Haushaltsstromnetz abgegeben werden.

Eine weitere Möglichkeit ist die Bereitstellung von elektrischer Stromleistung durch erneuerbare Energiequellen, z.B. eine Plug-in-Photovoltaikanlage (Steckersolargerät) oder eine Windkraftanlage. Der Wechselrichter weist maximal die für Steckersolargeräte gesetzlich erlaubte Ausgangsleistung eP von elektrischer Leistung in ein Haushaltsstromnetz auf. In Deutschland beträgt derzeit die gesetzlich erlaubte Ausgangsleistung eP maximal 600W.

In einer weiteren Ausgestaltung der Erfindung weist die eingespeicherte Stromleistung eine Peak-Leistung pvP mit pvP > 1000 W, bevorzugt mit pvP > 1600 W und besonders bevorzugt mit pvP > 2000 W auf. Hierdurch wird erreicht, dass auch zu Zeiten mit geringerer einspeicherbarer Stromleistung ausreichend elektrische Leistung bereitgestellt werden kann, um die angeschlossene Stromspeicher-Einheit so weit zu laden, dass die in der Stromspeicher-Einheit gespeicherte elektrische Leistung weitestgehend ausreicht, den gesamten Stromleistungsverbrauch und/oder den vollständigen Stromleistungsbedarf des Haushaltes zu den Tageszeiten zu decken, in denen die einspeicherbare Stromleistung nicht ausreicht, den Verbrauch der an das Haushaltsstromnetz angeschlossenen Verbraucher zu decken.

In einer weiteren Gestaltung der Erfindung weist der Wechselrichter eine Ausgangsleistung eP mit eP < 1800 W bevorzugt eP < 800 W besonders bevorzugt eP < 600 W auf. Der Wechselrichter weist maximal die für Steckersolargeräte gesetzlich erlaubte Ausgangsleistung eP von elektrischer Leistung in ein Haushaltsstromnetz auf. In Deutschland beträgt derzeit die gesetzlich erlaubte Ausgangsleistung eP maximal 600W.

In einer weiteren Ausbildung der Erfindung ist der Anschlussstecker geeignet, über eine Standardhaushaltssteckdose einen direkten Anschluss an ein Haushaltsstromnetz herzustellen. In einer Weiterbildung der Erfindung ist der Anschlussstecker ein Stecker aus der Gruppe Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1) und/oder Wieland-Stecker. Der Anschluss des erfindungsgemäßen Stromspeicher-Systems benötigt daher keine Installation durch Fachleute und ist auch von einem Nutzer einfach und zuverlässig durchführbar.

In einem vorteilhaften Aspekt der Erfindung weist das Stromspeicher-System eine Stromspeicher-Einheit auf. Die Stromspeicher-Einheit ist wiederaufladbar und umfasst z.B. eine handelsübliche Lithium-Batterie, die verfügbar und preiswert ist. Die Stromspeicher-Einheit ist über eine Stromleitung mit der Photovoltaikeinheit und dem Wechselrichter verbunden.

In einer Weiterbildung der Erfindung weist die Stromspeicher-Einheit einen Stromspeicher mit einer Speicherkapazität C mit C >2,5 kWh, bevorzugt mit C > 3 kWh und besonders bevorzugt mit C > 4 kWh auf. Idealerweise weist die Stromspeicher-Einheit einen Stromspeicher mit einer derartigen Kapazität auf, dass der gesamte Stromleistungsverbrauch und/oder der vollständige Stromleistungsbedarf des Haushaltes in den Zeiten, in denen eine Aufladung der Stromspeicher-Einheit nicht oder nur ungenügend erfolgt, gedeckt ist.

In einer weiteren Ausführung der Erfindung weist die Stromspeicher-Einheit einen Regler auf, wobei mit dem Regler die von der Stromspeicher-Einheit abgebbare elektrische Leistung regelbar ist. Der Regler regelt optional, wie viel der von der einspeicherbaren elektrischen Leistung in der Batterie gespeichert und/oder optional an den Wechselrichter abgegeben wird. In einer weiteren Ausgestaltung der Erfindung regelt der Regler die elektrische Leistung, die von der Stromspeicher-Einheit an den Wechselrichter abgegeben wird. Optional kann der Regler auch an oder in der Steuerung angeordnet werden.

In einer weiteren Ausbildung der Erfindung weist die Stromspeicher-Einheit einen Wandler auf, wobei durch den Wandler die Stromstärke der von der Stromspeicher-Einheit abgegebenen Stromleistung wandelbar ist. Durch Einsatz des Wandlers wird sichergestellt, dass die Stromstärke der von der Stromspeicher-Einheit abgegebenen Stromleistung nicht die zulässige Stromstärke des Wechselrichters übersteigt und so Beschädigungen des Wechselrichters verhindert.

In einer weiteren Ausgestaltung der Erfindung wird die durch das Stromspeicher-Einheit in das Haushaltsstromnetz eingespeiste Stromleistung durch eine Steuerung gesteuert. Mittels der Steuerung wird die Einspeisung von elektrischer Leistung eP in das Haushaltsstromnetz aus der Stromspeicher-Einheit abhängig von dem Verbrauch von elektrischer Leistung vP des Haushaltsstromnetzes geregelt, der mittels der Stromleistungsmesseinheit ermittelt wird. Die elektrische Leistung eP wird dabei dem Verbrauch der elektrischen Leistung vP des Haushaltsstromnetzes angepasst, d.h. es wird maximal nur so viel elektrische Leistung eP von der Batterie in das Haushaltsstromnetzwerk eingespeist, wie auch tatsächlich verbraucht wird. Die Steuerung ist bevorzugt optional als App auf einem Gerät (z.B. Smartphone, Tablet, Personal Computer) bevorzugt mobil ausgeführt.

In einer weiteren Ausführung der Erfindung ist die Steuerung mit der Stromleistungsmesseinheit und/oder mit dem Stromleistungsmessgerät gekoppelt, wobei die durch die Stromleistungsmesseinheit und/oder das Stromleistungsmessgerät erfassten Daten mit der Steuerung weiter verarbeitbar sind. In einer weiteren Gestaltung der Erfindung ist die Steuerung mit der Stromspeicher-Einheit gekoppelt, wobei durch die Steuerung die von der Stromspeicher-Einheit abgebbare Stromleistung steuerbar ist. Die mit der Steuerung verbundenen Komponenten des Stromspeicher-Systems in (Stromspeicher-Einheit mit Wandler und Regler, Stromleistungsmesseinheit) sind optional drahtlos (z.B. WiFi, Bluetooth, IP-Verbindung) mit der Steuerung gekoppelt und steuerbar. Die elektrische Leistung eP ist dabei dem Verbrauch der elektrischen Leistung vP des Haushaltsstromnetzes anpassbar, d.h. es wird maximal nur so viel elektrische Leistung eP von der Batterie in das Haushaltsstromnetzwerk eingespeist, wie auch tatsächlich verbraucht wird.

In einer weiteren optionalen Ausführungsform der Erfindung ist die Steuerung mit dem Stromleistungsmessgerät direkt gekoppelt, Eine direkte Koppelung im Sinne dieser Schrift ist eine direkte kabelgebundene Verbindung, eine direkte drahtlose Verbindung oder eine drahtlose Verbindung ausschließlich über einen im Haushaltsstromnetz angeschlossenen Router, Dies hat den Vorteil, dass auch bei fehlender Internetverbindung eine Kommunikation zwischen Stromleistungsmessgerät und Steuerung erfolgen kann.

In einer weiteren Ausführungsform der Erfindung erfolgt eine Einspeisung einer Stromleistung in das Haushaltsstromnetz, die über dem aktuellen Stromleistungsverbrauch und/oder einen vollständigen Stromleistungsbedarf des Haushaltes liegt. Dies hat den Vorteil, dass der Stromleistungsverbrauch und/oder einen vollständigen Stromleistungsbedarf des Haushaltes immer gedeckt ist.

Die Aufgabe wird ebenfalls mittels des Stromspeicher-Systems zur Einspeisung von elektrischer Leistung in ein Haushaltsstromnetz gelöst. Vorteilhafte Ausführungen der Erfindung sind ebenfalls in den Unteransprüchen dargelegt.

Das erfindungsgemäße Stromspeicher-System zur Einspeisung von elektrischer Leistung in ein Haushaltsstromnetz umfasst eine Stromspeicher-Einheit, einen Wechselrichter, einen Anschlussstecker, eine Stromleistungsmesseinheit und eine Steuerung, wobei die Stromleistungsmesseinheit dafür vorgesehen und dafür geeignet ist, den gesamten Stromleistungsverbrauch und/oder den vollständigen Stromleistungsbedarf des Haushaltes zu ermitteln.

Mittels des Wechselrichters wird der von der Stromspeicher-Einheit gelieferte einzuspeisende Gleichstrom in einen Wechselstrom umgewandelt. Der Wechselrichter begrenzt ebenfalls die Leistung der in das Haushaltsstromnetz eingespeisten elektrischen Leistung (derzeit in Deutschland maximal 600 W.

Ein Haushaltsstromnetz ist ein Stromnetz innerhalb z.B. eines Wohnhauses, deren elektrische Leitungen derart ausgelegt sind, dass (in Deutschland) elektrischer Wechselstrom mit einer Wechselspannung von maximal 230 V und einer Stromstärke von maximal 16 A (begrenzt durch geeignete Sicherungen) in dem Stromnetz fließen und an elektrisch betriebene Geräte abgegeben werden kann.

Mittels der Stromleistungsmesseinheit ist der gesamte Stromleistungsverbrauch und/oder der vollständige Stromleistungsbedarf des Haushaltes jederzeit ermittelbar. Dazu ist die Stromleistungsmesseinheit an einem oder optional an einem Eingang des öffentlichen Stromnetzes zum Haushaltsstromnetz angeordnet und erfasst kontinuierlich in einstellbaren Zeitintervallen den Stromleistungsverbrauch und/oder den vollständigen Stromleistungsbedarf des Haushaltsstromnetzes.

In einer Weiterbildung der Erfindung weist die Stromleistungsmesseinheit ein Stromleistungsmessgerät auf. Das Stromleistungsmessgerät misst kontinuierlich in einem Haushaltsstromnetz den fließenden elektrischen Strom und dessen elektrische Spannung und ermittelt daraus die im Haushaltsstromnetz befindliche elektrische Leistung. Stromleistungsmessgerät ist z.B. als Rogowski-Spule, Zangenamperemeter, Induktionsklemme oder gleichwirkende Vorrichtung ausgebildet.

In einer weiteren Ausführung der Erfindung weist die Stromleistungsmesseinheit mehrere Stromleistungsmessgeräte auf. Jedes der Stromleistungsmessgeräte ist optional an einem unterschiedlichen Ort des Haushaltsstromnetzes angeordnet. Damit ist die kontinuierliche Erfassung des Stromleistungsverbrauchs und/oder des vollständigen Stromleistungsbedarfs in einstellbaren Zeitintervallen des Haushaltsstromnetzes möglich.

In einer weiteren Gestaltung der Erfindung ist die Stromleistungsmesseinheit derart mit einem Haushaltsstromnetz koppelbar, dass mit einem Stromleistungsmessgerät der Stromleistungsmesseinheit der vollständige Stromleistungsverbrauch des Haushaltes und/oder den vollständige Stromleistungsbedarf des Haushaltes erfassbar ist. In einer vorteilhaften Ausbildung der Erfindung ist das Stromleistungsmessgerät an einem Stromzähler und/oder zwischen dem Stromzähler und einer Sicherung des Haushaltsstromnetzes zur Erfassung des Stromleistungsverbrauchs und/oder des Stromleistungsbedarfs des Haushaltsstromnetzes angeordnet. Damit ist die kontinuierliche Erfassung des Stromleistungsverbrauchs und/oder des vollständigen Stromleistungsbedarfs in einstellbaren Zeitintervallen möglich. Die Anordnung des Stromleistungsmessgerätes über eine Schnittstelle des Stromzählers im Haushaltsnetz erfordert keine Installation des Stromleistungsmessgerätes durch Fachleute und ist daher auch von einem Nutzer einfach und zuverlässig durchführbar. Optional kann ein Stromleistungsmessgerätes zwischen dem Stromzähler und einer Sicherung des Haushaltsstromnetzes angeordnet werden. Hiermit ist die im Haushaltsnetz verbrauchte elektrische Leistung ermittelbar. Dies hat den Vorteil, dass der Verbrauch der elektrischen Leistung über einen bereits geeichten Zähler ermittelt wird.

In einer weiteren Gestaltung der Erfindung weist der Wechselrichter eine Ausgangsleistung eP mit eP < 1800 W bevorzugt eP < 800 W besonders bevorzugt eP < 600 W auf. Der Wechselrichter weist maximal die für Steckersolargeräte gesetzlich erlaubte Ausgangsleistung eP von elektrischer Leistung in ein Haushaltsstromnetz auf. In Deutschland beträgt derzeit die gesetzlich erlaubte Ausgangsleistung eP maximal 600W.

In einer weiteren Ausbildung der Erfindung ist der Anschlussstecker geeignet, über eine Standardhaushaltssteckdose einen direkten Anschluss an ein Haushaltsstromnetz herzustellen. In einer Weiterbildung der Erfindung ist der Anschlussstecker ein Stecker aus der Gruppe Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1) und/oder Wieland-Stecker. Der Anschluss des erfindungsgemäßen Stromspeicher-Systems benötigt daher keine Installation durch Fachleute und ist auch von einem Nutzer einfach und zuverlässig durchführbar.

In einem vorteilhaften Aspekt der Erfindung weist das Stromspeicher-System eine Stromspeicher-Einheit auf. Die Stromspeicher-Einheit ist wiederaufladbar und umfasst z.B. eine handelsübliche Lithium-Phosphat-Batterie, die verfügbar und preiswert ist. Die Stromspeicher-Einheit ist über eine Stromleitung mit Wechselrichter verbunden.

In einer Weiterbildung der Erfindung weist die Stromspeicher-Einheit einen Stromspeicher mit einer Speicherkapazität C mit C >2,5 kWh, bevorzugt mit C > 3 kWh und besonders bevorzugt mit C > 4 kWh auf. Idealerweise weist die Stromspeicher-Einheit einen Stromspeicher mit einer derartigen Kapazität auf, dass der gesamte Stromleistungsverbrauch und/oder der vollständige Stromleistungsbedarf des Haushaltes in den Zeiten, in denen eine Aufladung der Stromspeicher-Einheit nicht erfolgt, gedeckt ist.

In einer weiteren Ausführung der Erfindung west die Stromspeicher-Einheit einen Regler auf, wobei mit dem Regler die von der Stromspeicher-Einheit abgebbare elektrische Leistung regelbar ist. Der Regler regelt optional die Menge der einspeicherbaren elektrischen Leistung, die in Stromspeicher-Einheit gespeichert wird und/oder optional an den Wechselrichter abgegeben wird. In einer weiteren Ausgestaltung der Erfindung regelt der Regler die elektrische Leistung, die von der Stromspeicher-Einheit an den Wechselrichter abgegeben wird. Optional kann der Regler auch an oder in der Steuerung angeordnet werden.

In einer weiteren Ausbildung der Erfindung weist die Stromspeicher-Einheit einen Wandler auf, wobei durch den Wandler die Stromstärke der von der Stromspeicher-Einheit abgegebenen Stromleistung wandelbar ist. Optional ist durch den Wandler ebenfalls die Stromstärke der einspeicherbaren elektrischen Leistung wandelbar. Durch Einsatz des Wandlers wird sichergestellt, dass die Stromstärke der von der Stromspeicher-Einheit abgegebenen Stromleistung nicht die zulässige Stromstärke des Wechselrichters übersteigt und verhindert damit Beschädigungen des Wechselrichters.

In einer weiteren Ausgestaltung der Erfindung weist das Stromspeicher-System eine Steuerung auf. Mittels der Steuerung ist die Einspeisung von elektrischer Leistung eP in das Haushaltsstromnetz aus der Stromspeicher-Einheit abhängig von dem Verbrauch von elektrischer Leistung vP des Haushaltsstromnetzes regelbar, der mittels der Stromleistungsmesseinheit ermittelbar ist. Die elektrische Leistung eP ist dabei dem Verbrauch der elektrischen Leistung vP des Haushaltsstromnetzes anpassbar, d.h. es wird maximal nur so viel elektrische Leistung eP von der Stromspeicher-Einheit in das Haushaltsstromnetzwerk eingespeist, wie auch tatsächlich verbraucht wird. Die Steuerung ist bevorzugt optional als App auf einem Gerät (z.B. Smartphone, Tablet, Personal Computer) bevorzugt mobil ausgeführt.

In einer weiteren Ausführung der Erfindung ist die Steuerung mit der Stromleistungsmesseinheit gekoppelt, wobei die durch die Stromleistungsmesseinheit erfassten Daten mit der Steuerung weiter verarbeitbar sind. In einer weiteren Gestaltung der Erfindung ist die Steuerung mit der Stromspeicher-Einheit gekoppelt, wobei durch die Steuerung die von der Stromspeicher-Einheit abgebbare Stromleistung steuerbar ist. Die mit der Steuerung verbundenen Komponenten des Steckersolargerätes sind optional drahtlos (z.B. WiFi, Bluetooth, IP-Verbindung) steuerbar. Die elektrische Leistung eP ist dabei dem Verbrauch der elektrischen Leistung vP des Haushaltsstromnetzes anpassbar, d.h. es wird maximal nur so viel elektrische Leistung eP von der Batterie in das Haushaltsstromnetzwerk eingespeist, wie auch tatsächlich verbraucht wird.

In einer weiteren optionalen Ausführungsform der Erfindung ist die Steuerung mit dem Stromleistungsmessgerät direkt gekoppelt. Eine direkte Koppelung im Sinne dieser Schrift ist eine direkte kabelgebundene Verbindung, eine direkte drahtlose Verbindung oder eine drahtlose Verbindung ausschließlich über einen im Haushaltsstromnetz angeschlossenen Router. Dies hat den Vorteil, dass auch bei fehlender Internetverbindung eine Kommunikation zwischen Stromleistungsmessgerät und Steuerung erfolgen kann.

In einer weiteren Weiterbildung der Erfindung ist das Stromspeicher-System dafür geeignet und dafür vorgesehen eine Stromleistung in das Haushaltsstromnetz einzuspeisen, die über dem aktuellen den gesamten Stromleistungsverbrauch und/oder den vollständigen Stromleistungsbedarf des Haushaltes liegt. Dies hat den Vorteil, dass sichergestellt, dass der gesamte Stromleistungsverbrauch und/oder der vollständigen Stromleistungsbedarf des Haushaltes gedeckt wird.

Ausführungsbeispiele des erfindungsgemäßen Stromspeicher-Systems und des erfindungsgemäßen Verfahrens zum Betrieb eines Stromspeicher-Systems sind in den Zeichnungen schematisch vereinfacht dargestellt und werden in der nachfolgenden Beschreibung näher erläutert.

Es zeigen:
- Fig. 1:: Erfindungsgemäßes Stromspeicher-System
- Fig. 2 a:: Stromspeicher-System, eine Photovoltaikeinheit (Steckersolargerät)

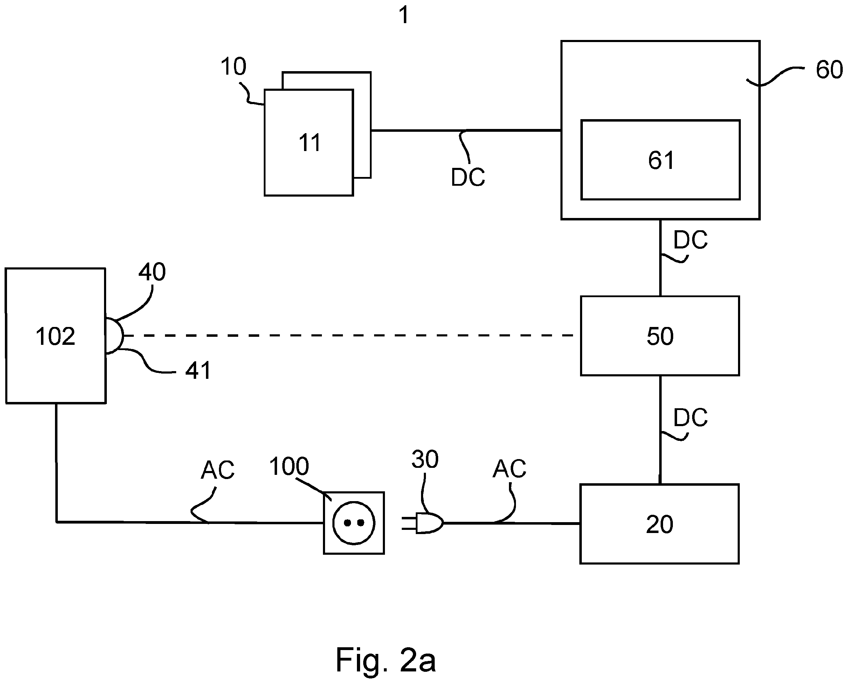

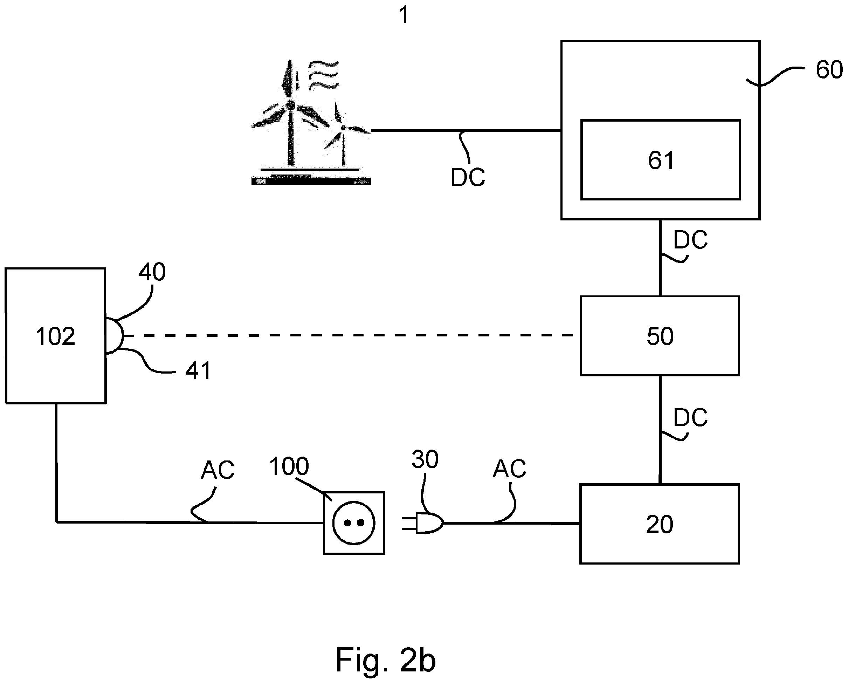

- Fig. 2 b:: Stromspeicher-System, ein Windkraftanlage

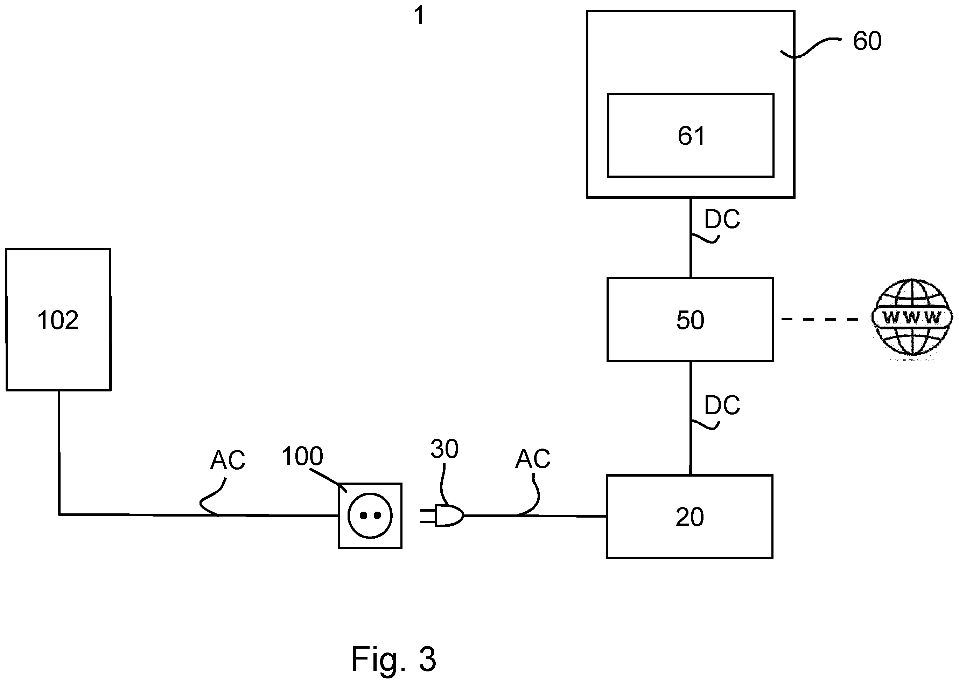

- Fig. 3:: Stromspeicher-System, Aufladung der Stromspeicher-Einheit durch öffentliches Stromnetz

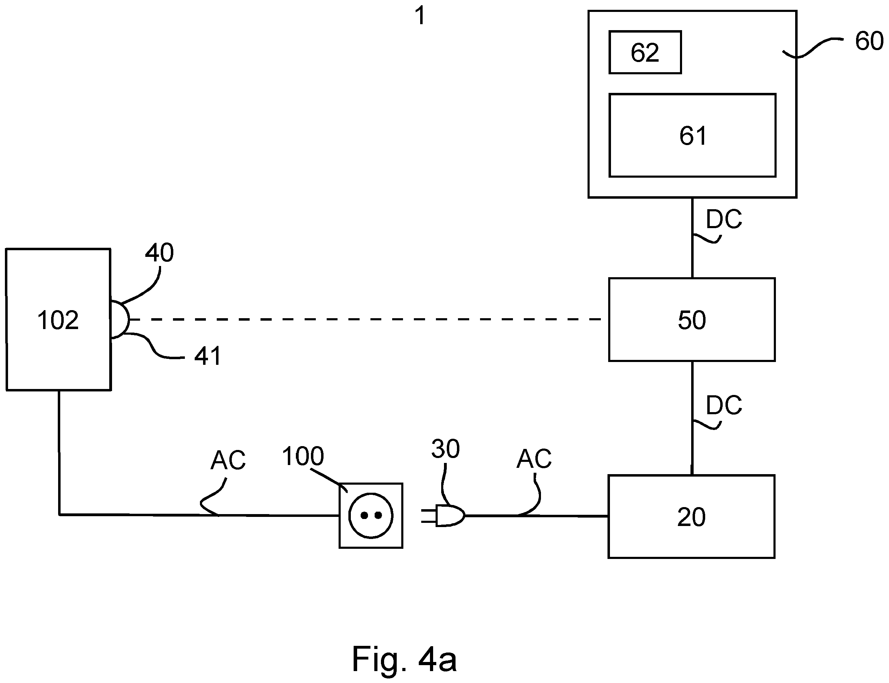

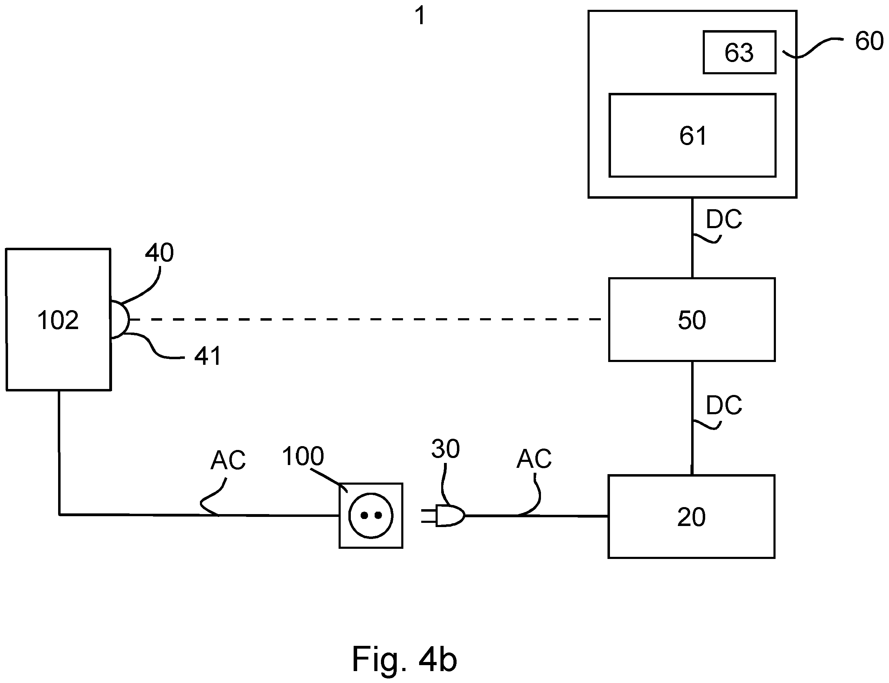

- Fig. 4 a:: Stromspeicher-System, Regler an Stromspeicher-Einheit angeordnet
- Fig. 4 b:: Stromspeicher-System, Wandler an Stromspeicher-Einheit angeordnet

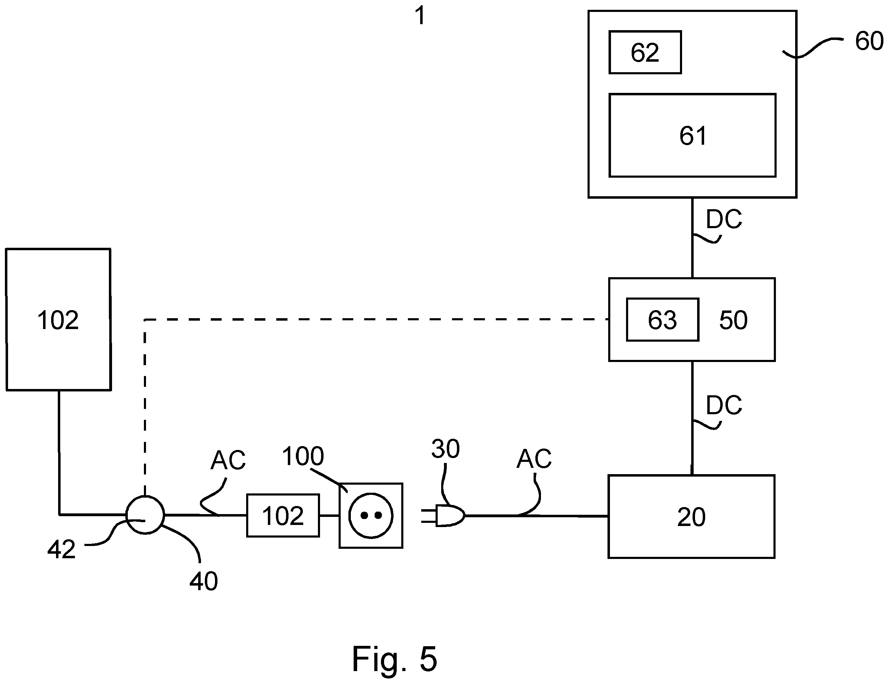

- Fig. 5:: Stromspeicher-System, ein Stromleistungsmessgerät zwischen Stromzähler und Standardhaushaltssteckdose angeordnet

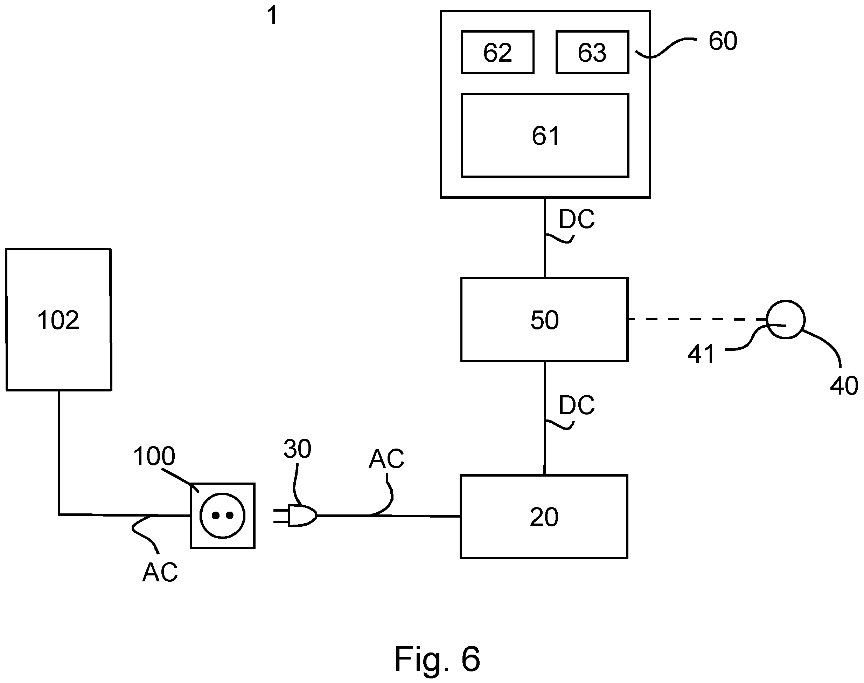

- Fig. 6:: Stromspeicher-System in Kombination mit PV-Anlage

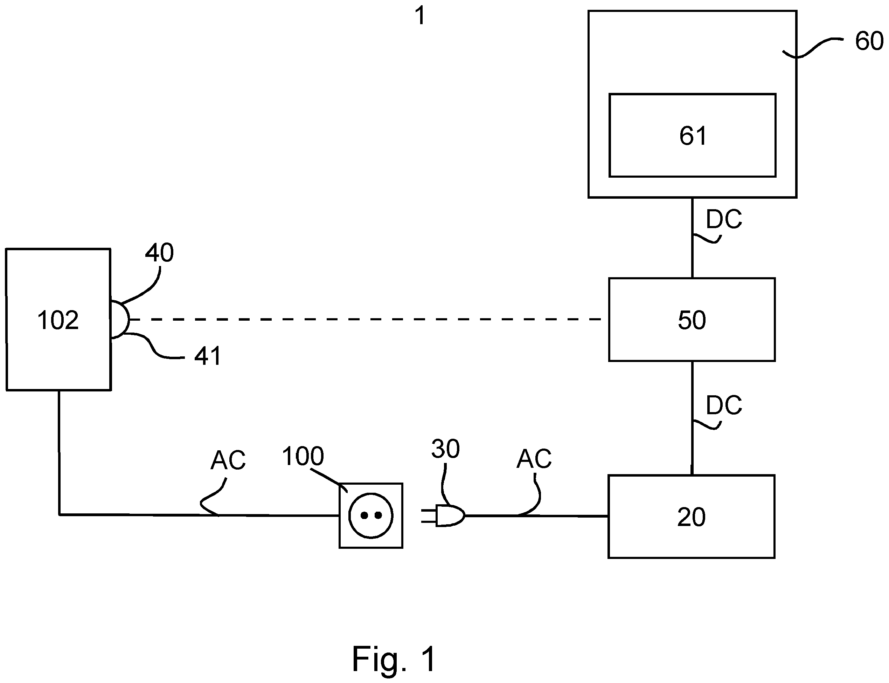

Fig. 1 zeigt schematisch den Aufbau und die Verschaltung des erfindungsgemäßen Stromspeicher-Systems 1. Das Stromspeicher-System 1 weist die Stromspeicher-Einheit 60 auf, die einen wiederaufladbaren Stromspeicher 61 aufweist. Der Stromspeicher 61 weist eine in diesem und allen weiteren Ausführungsbeispielen eine Speicherkapazität C von 5 kWh auf, durch Anordnung von weiteren Stromspeichern 61 kann die Speicherkapazität C der Stromspeicher-Einheit 60 beliebig gewählt werden. Der wiederaufladbare Stromspeicher 61 ist ein Lithiumeisenphosphat-Akku, möglich sind aber auch andere Ausführungsformen, z.B. ein Blei-Säure-Akku.

Die Stromspeicher-Einheit 60 ist über eine Gleichstromleitung DC mit der Steuerung 50 verbunden, die Steuerung 50 über eine weitere Gleichstromleitung DC dem Wechselrichter 20.

Die Steuerung 50 ist mit der Stromleistungsmesseinheit 40 kabellos verbunden, die in diesem Ausführungsbeispiel ein einzelnes Stromleistungsmessgerät 41 aufweist. Das Stromleistungsmessgerät 41 weist einen optischen Lesekopf auf, der zwischen der Hauptsicherung 102 des Haushaltsstromnetzes und Sicherungen der einzelnen Stromkreise des Haushaltsstromnetzes angeordnet ist. Die Steuerung 50 ist als App auf einem Gerät (z.B. Smartphone, Tablet, Personal Computer) ausgeführt. Die Verbindung zur Stromspeicher-Einheit 60 und zum Stromleistungsmesseinheit 40 ist drahtlos mittels WiFi.

Der Wechselrichter 20 weist maximal die erlaubte Ausgangsleistung eP von elektrischer Leistung in ein Haushaltsstromnetz auf, optional eP < 1000W bevorzugt eP < 800W besonders bevorzugt eP < 600W. In Deutschland beträgt die derzeit die erlaubte Ausgangsleistung eP maximal 600W, in allen gezeigten Ausführungsbeispielen beträgt die maximale Ausgangsleistung eP des Wechselrichters 20 daher 600W. Der Wechselrichter 20 ist über die Stromleitung AC mit dem Stecker 30 verbunden, der einen Anschlussstecker 30 zum Anschluss über die Standardhaushaltssteckdose 100 an das Haushaltsstromnetz ist.

Der Anschlussstecker 30 ist ein Stecker aus der Gruppe Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1) und/oder Wieland-Stecker. In diesem und allen weiteren Ausführungsbeispielen ist der Anschlussstecker 30 ein Stecker-Typ F (CEE 7/4) "Schukostecker", mit dem die vom Steckersolargerät 1 erzeugt elektrische Leistung über die Standardhaushaltssteckdose 100 in das Haushaltsstromnetz eingespeist werden kann.

Mittels der Steuerung 50 wird das Verfahren zur Einspeisung von elektrischer Leistung in ein Haushaltsstromnetzwerk gesteuert. Während des Betriebes des Stromspeicher-Systems 1 erfasst die Stromleistungsmesseinheit 40 mittels des Stromleistungsmessgerätes 41 die aktuelle und vollständige Bezugs- und/oder Verbrauchsstromleistung des Haushaltstromnetzes aller im Haushaltstromnetz befindlichen Stromverbraucher. Die Erfassung der Bezugs- und/oder der Verbrauchsstromleistung erfolgt fortlaufend im Takt von 1 Sekunde, der Takt ist dabei mittels der Steuerung 50 einstellbar. Diese aktuelle und vollständig erfasste Bezugs- und/oder des Verbrauchsstromleistung des Haushaltstromnetzes wird ebenfalls im Takt von 1 Sekunde an die Steuerung 50 übertragen. Die Steuerung 50 regelt auf Grundlage der erfassten Bezugs- und/oder der Verbrauchsstromleistung des Haushaltstromnetzes über einen DC/DC-Regler die Stromspeicher-Einheit 60 derart, dass die Stromspeicher-Einheit 60 eine derartige Stromleistung als Gleichstrom DC an den Wechselrichter 20 abgibt, dass die Bezugs- und/oder die Verbrauchsstromleistung des Haushaltstromnetzes mit einem Takt von 1 Sekunde vollständig gedeckt ist. Der Wechselrichter 20 wandelt den Gleichstrom DC der Stromspeicher-Einheit 60 in einen Wechselstrom AC (in Deutschland mit 230V) um, über den mit dem Wechselrichter 20 verbundenen Anschlussstecker 30 wird der Wechselstrom AC in die Standardhaushaltssteckdose 100 in das Haushaltsstromnetz eingespeist. In anderen Ausführungsformen kann der Takt auch beispielsweise 0,5 Sekunden, 2 Sekunden oder auch 2,5 Sekunden betragen. In jedem Fall bleibt der Takt aber kleinergleich 3 Sekunden.. Erfasst die Stromleistungsmessgerät einen Stromleistungsverbrauch und/oder einen vollständigen Stromleistungsbedarf des Haushaltes von 265W, so wird nur eine kurze Zeit später eine Stromleistung in Höhe von 265W in das Haushaltsstromnetz eingespeist. Im Falle eines abfallenden Stromleistungsverbrauchs und/oder vollständigen Stromleistungsbedarfs des Haushaltes erfolgt eine Einspeisung einer Stromleistung in das Haushaltsstromnetz, die über dem aktuellen Stromleistungsverbrauch und/oder einen vollständigen Stromleistungsbedarf des Haushaltes liegt.

Fig. 2 zeigt ein Ausführungsbeispiel des erfindungsgemäßen Stromspeicher-Systems 1, wobei die Stromspeicher-Einheit 60 im Betrieb von einer Einrichtung 10 zur Erzeugung primärer elektrischer Leistung aufgeladen wird. Das Stromspeicher-System 1 entspricht dem im vorherstehenden Ausführungsbeispiel dargestellten (s. Fig. 1), die Stromspeicher-Einheit 60 ist lediglich mit einer Einrichtung 10 zur Erzeugung primärer elektrischer Leistung über eine Gleichstromleitung DC verbunden.

Die Einrichtung 10 zur Erzeugung primärer elektrischer Leistung ist eine Photovoltaikeinheit mit zwei PV-Modulen 11 (Fig. 2 a), das Stromspeicher-System 1 ist als Steckersolargerät einsetzbar. Die Einrichtung 10 zur Erzeugung primärer elektrischer Leistung kann auch eine Windkraftanlage und/oder eine Windturbine (Fig. 2 b) sein, die mit einem Gleichrichter gekoppelt ist, einen Gleichstrom DC erzeugt und an die Stromspeicher-Einheit 60 leitet, wo die erzeugte elektrische Leistung zur Aufladung des Stromspeichers 61 dient.

Während ein PV-Modul 11 zu Zeiten von Sonneneinstrahlung und insbesondere in den Sommermonaten eine vergleichsweise hohe elektrische Leistung erzeugen, erzeugt eine Windkraftanlage insbesondere in den sonnenarmen Monaten, insbesondere im Winter, eine vergleichsweise hohe elektrische Leistung. Beide Arten der Erzeugung können daher komplementär in der Erzeugung elektrischer Leistung betrachtet und im Rahmen dieser Erfindung auch parallel geschaltet als Einrichtung 10 zur Erzeugung primärer elektrischer Leistung angewandt werden. In anderen Ausführungen kann die maximale Ausgangsleistung eP des Wechselrichters 20 auch 800W oder 1800W betragen.

Die Stromspeicher-Einheit 60 weist weiterhin eine Bypass-Stromleitung auf, durch die eine Stromleistung von der Einrichtung 10 zur Erzeugung primärer elektrischer Leistung über den Laderegler 62 an dem Stromspeicher 61 vorbei direkt zum Wechselrichter 20 geleitet werden kann.

Das Einrichtung 10 zur Erzeugung primärer elektrischer Leistung erzeugt eine elektrische Leistung. Die Peak-Leistung pvP der Einrichtung 10 zur Erzeugung primärer elektrischer Leistung ist optional derart gewählt, dass die Peak-Leistung pvP der Einrichtung 10 zur Erzeugung primärer elektrischer Leistung höher ist als die maximal erlaubte Einspeiseleistung (derzeit in Deutschland 600 W) von elektrischer Leistung in ein Haushaltsstromnetz. Idealerweise beträgt die Peak-Leistung pvP der Einrichtung 10 zur Erzeugung primärer elektrischer Leistung optional ein Mehrfaches der maximal erlaubten Einspeiseleistung, z.B. das Doppelte oder Dreifache der Einspeiseleistung. Die Einrichtung 10 zur Erzeugung primärer elektrischer Leistung weist eine Peak-Leistung pvP mit pvP > 1000W, bevorzugt mit pvP > 1600W und besonders bevorzugt mit pvP > 2000W auf, in diesem Ausführungsbeispiel weist die Einrichtung 10 zur Erzeugung primärer elektrischer Leistung eine Peak-Leistung pvP = 1600W auf.

Die von der Einrichtung 10 zur Erzeugung primärer elektrischer Leistung erzeugte elektrische Leistung wird als Gleichstrom DC in der Stromspeicher-Einheit 60 gespeichert. Das Speichern der erzeugten elektrischen Leistung erfolgt optional so lange, bis die Stromspeicher-Einheit 60 vollständig geladen ist.

Das Verfahren zur Einspeisung von elektrischer Leistung in ein Haushaltsstromnetzwerk erfolgt dann wie bereits beschrieben: Während des Betriebes des Stromspeicher-Systems 1 erfasst die Stromleistungsmesseinheit 40 mittels des Stromleistungsmessgerätes 41 die aktuelle und vollständige Bezugs- und/oder Verbrauchsstromleistung des Haushaltstromnetzes aller im Haushaltstromnetz befindlichen Stromverbraucher. Die Erfassung der Bezugs- und/oder der Verbrauchsstromleistung erfolgt fortlaufend im Takt von 1 Sekunde. Diese aktuelle und vollständig erfasste Bezugs- und/oder des Verbrauchsstromleistung des Haushaltstromnetzes wird ebenfalls im Takt von 1 Sekunde an die Steuerung 50 übertragen. Die Steuerung 50 regelt auf Grundlage der erfassten Bezugs- und/oder der Verbrauchsstromleistung des Haushaltstromnetzes die Stromspeicher-Einheit 60 derart, dass die Stromspeicher-Einheit 60 eine derartige Stromleistung als Gleichstrom DC an den Wechselrichter 20 abgibt, dass die Bezugs- und/oder die Verbrauchsstromleistung des Haushaltstromnetzes mit einem Takt von 1 Sekunde vollständig gedeckt ist. Der Wechselrichter 20 wandelt den Gleichstrom DC der Stromspeicher-Einheit 60 in einen Wechselstrom AC um, über den mit dem Wechselrichter 20 verbundenen Anschlussstecker 30 wird der Wechselstrom AC in die Standardhaushaltssteckdose 100 in das Haushaltsstromnetz eingespeist.

Dabei wird die Einspeisung von Stromleistung von der Stromspeicher-Einheit 60 durch zwei Faktoren begrenzt, einerseits durch die maximale Ausgangsleistung eP des Wechselrichters 20 (hier 600W), andererseits durch den Ladezustand der Stromspeicher-Einheit 60. Wenn die erfasste Bezugs- und/oder Verbrauchsstromleistung des Haushaltstromnetzes über der maximalen Ausgangsleistung eP des Wechselrichters 20 liegt, wird die eingespeiste Stromleistung auf die maximale Ausgangsleistung eP des Wechselrichters 20 begrenzt. In diesem und allen weiteren Ausführungsbeispielen werden also maximal 600W Stromleistung in das Haushaltstromnetz eingespeist. Die Einspeisung von Stromleistung von der Stromspeicher-Einheit 60 erfolgt nur dann, wenn die Stromspeicher-Einheit 60 genügend geladen ist. Ist die Stromspeicher-Einheit 60 nicht oder nur so weit geladen, dass eine weitere Entnahme von Stromleistung der Stromspeicher-Einheit 60 Schaden zufügen kann (z.B. durch Tiefentladung), erfolgt keine Einspeisung von Stromleistung von der Stromspeicher-Einheit 60. Die Steuerung 50, die mit der Stromspeicher-Einheit 60 verbunden ist, erkennt dies und regelt entsprechend die Abgabe von Stromleistung.

Dadurch wird erreicht, dass so lange elektrische Energie aus der Stromspeicher-Einheit 60 in das Haushaltstromnetz eingespeist wird, wie die Stromspeicher-Einheit 60 über elektrische Energie verfügt. Durch eine geeignete Wahl der Peak-Leistung der Einrichtung 10 zur Erzeugung primärer elektrischer Leistung (pvP = 1600W) ist sichergestellt, dass die Stromspeicher-Einheit 60 zu Zeiten hoher Erzeugung von elektrischer Leistung ständig geladen wird und damit auch in Zeiten, in denen die Erzeugung von elektrischer Leistung gering ist, elektrische Leistung eP in das Haushaltstromnetz abgibt. Die elektrische Leistung eP ist dabei dem Verbrauch der elektrischen Leistung vP des Haushaltsstromnetzes angepasst, d.h. es wird maximal nur so viel elektrische Leistung eP von der Stromspeicher-Einheit 60 in das Haushaltstromnetz eingespeist, wie auch tatsächlich verbraucht wird. Damit ist sichergestellt, dass der Bedarf von elektrischer Leistung vP des Haushaltstromnetzes gedeckt ist, gleichzeitig möglichst wenig elektrische Leistung aus dem öffentlichen Stromnetz in das Haushaltstromnetz eingespeist wird.

Eine Variante des Stromspeicher-Systems 1 zeigt Fig. 3. Das hier gezeigte Stromspeicher-System 1 entspricht dem im ersten Ausführungsbeispiel gezeigten Stromspeicher-System 1 (s. Fig. 1), in diesem Ausführungsbeispiel weist die Steuerung 50 eine App auf, die über eine IP-Verbindung WWW mit einer Strombörse verbunden ist. In Zeiten eines niedrigen Strompreises - angezeigt durch die Verbindung mit der Strombörse - steuert die Steuerung 50 den Stromfluss des Stromspeicher-Systems 1 derart, dass elektrische Leistung als Wechselstrom AC aus dem Haushaltstromnetz bezogen wird. Der Wechselrichter 20 ist in diesem Ausführungsbeispiel in Baueinheit mit einem Gleichrichter derart angeordnet, dass die vom Haushaltstromnetz als Wechselstrom AC durch den Gleichrichter in einen Gleichstrom DC umgewandelt wird und geregelt über die Steuerung 50 in den Stromspeicher 61 der Stromspeicher-Einheit 60 zu dessen Aufladung geleitet wird. In Zeiten eines niedrigen Strompreises, z.B. in der Nacht, wird daher elektrische Leistung aus dem öffentlichen Stromnetz (Haushaltstromnetz) zur Aufladung des Stromspeichers 61 bezogen.

Die über das Haushaltstromnetz bezogene und in den Wechselrichter 20 in Baueinheit mit dem Gleichrichter 20 eingespeiste elektrische Leistung ist dabei beschränkt auf die in einem Haushaltsstromnetz maximale elektrische Leistung (in Deutschland derzeit 230V, 16A Wechselstrom 50Hz).

In Zeiten eines hohen Strompreises - ebenfalls angezeigt durch die Verbindung mit der Strombörse - steuert die Steuerung 50 den Stromfluss des Stromspeicher-Systems 1 derart, dass die in der Stromspeicher-Einheit 60 gespeicherte elektrische Leistung wieder an das Haushaltstromnetz abgegeben wird. Das Verfahren zur Abgabe elektrischer Leistung ist in Fig. 1 und Fig. 2 beschrieben. Die Preisgrenzen für die zu beziehende elektrische Leistung sind auf der Steuerung 50 einstellbar.

Weitere Varianten des erfindungsgemäßen Stromspeicher-Systems 1 zeigt Fig. 4. Die Stromleistungsmesseinheit 40 weist ein Stromleistungsmessgerät 41 auf, das einen optischen Lesekopf aufweist, der an der Sicherung 101 des Haushaltsstromnetzes angeordnet ist. Das Stromleistungsmessgerät 41 erfasst ebenfalls im Takt von 1 Sekunde die vollständige Bezugs- und/oder Verbrauchsstromleistung des Haushaltstromnetzes und sendet die erfassten Daten an die mit dem Stromleistungsmessgerät 41 verbundene Steuerung 50.

Die Stromspeicher-Einheit 60 weist neben dem Stromspeicher 61 mit einer Speicherkapazität C von 5 kWh einen Regler 62 auf (Fig. 4 a), der mit der Steuerung 50 verbunden ist. Die Steuerung 50 regelt auf Grundlage der erfassten Bezugs- und/oder der Verbrauchsstromleistung des Haushaltstromnetzes durch das Stromleistungsmessgerät 41 die Stromspeicher-Einheit 60 derart, dass die Stromspeicher-Einheit 60 eine derartige Stromleistung als Gleichstrom DC an den Wechselrichter 20 abgibt, dass die Bezugs- und/oder die Verbrauchsstromleistung des Haushaltstromnetzes mit einem Takt von 1 Sekunde vollständig gedeckt ist. Der Regler 62 regelt gesteuert durch die Steuerung 50, wie viel der von einer Einrichtung 10 zur Erzeugung primärer elektrischer Leistung (nicht dargestellt, s. Fig. 2), die mit der Stromspeicher-Einheit 60 über eine Gleichstromleitung DC verbunden ist, erzeugten elektrischen Leistung in der Stromspeicher-Einheit 60 gespeichert und/oder optional an den Wechselrichter 20 abgegeben wird. Diese Menge ist z.B. abhängig von dem Ladezustand der Stromspeicher-Einheit 60. Außerdem regelt der Regler 62 die elektrische Leistung, die von der Stromspeicher-Einheit 60 an den Wechselrichter 20 abgegeben wird.

Die Stromspeicher-Einheit 60 kann neben dem Stromspeicher 61 mit einer Speicherkapazität C von 5 kWh einen Wandler 63 aufweisen (Fig. 4 b), der mit der Steuerung 50 verbunden ist. Optional ist der Wandler 63 in der Steuerung 50 angeordnet. Die Steuerung 50 regelt auf Grundlage der erfassten Bezugs- und/oder der Verbrauchsstromleistung des Haushaltstromnetzes durch das Stromleistungsmessgerät 41 die Stromspeicher-Einheit 60 derart, dass die Stromspeicher-Einheit 60 eine derartige Stromleistung als Gleichstrom DC an den Wechselrichter 20 abgibt, dass die Bezugs- und/oder die Verbrauchsstromleistung des Haushaltstromnetzes mit einem Takt von 1 Sekunde vollständig gedeckt ist. Die Steuerung 50 steuert dabei den Wandler 63 derart, dass die die Stromstärke der von der Stromspeicher-Einheit 60 abgegebenen Stromleistung nicht die zulässige Stromstärke des Wechselrichters 20 übersteigt. Dadurch werden Beschädigungen des Wechselrichters 20 verhindert.

Eine weitere Variante des Stromspeicher-Systems 1 zeigt Fig. 5. Das hier gezeigte Steckersolargerät 1 entspricht dem im vorhergehenden Ausführungsbeispiel gezeigten Stromspeicher-System 1 (s. Fig. 4), in diesem Ausführungsbeispiel weist die Stromleistungsmesseinheit 40 ein Stromleistungsmessgerät 42 auf, das als Stromstärke-Messgerät (Amperemeter) ausgeführt ist. Das Stromleistungsmessgerät 42 ist an einer Schnittstelle des Stromzählers des Haushaltsstromnetzes angeordnet und erfasst im Takt von 1 Sekunde die vollständige Bezugs- und/oder Verbrauchsstromleistung des Haushaltstromnetzes. Das Stromleistungsmessgerät 42 ist ebenfalls mit der Steuerung 50 drahtlos verbunden.

Die Stromspeicher-Einheit 60 weist neben dem Stromspeicher 61 Regler 62 und Wandler 63 auf (s. Fig. 4 a, b). Der Regler 62 regelt gesteuert durch die Steuerung 50, wie viel der von einer Einrichtung 10 zur Erzeugung primärer elektrischer Leistung, die mit der Stromspeicher-Einheit 60 über eine Gleichstromleitung DC verbunden ist, erzeugten elektrischen Leistung in der Stromspeicher-Einheit 60 gespeichert und/oder optional an den Wechselrichter 20 abgegeben wird. Der Wandler 63 wandelt die von einer Einrichtung 10 zur Erzeugung primärer elektrischer Leistung erzeugte elektrische Leistung derart, dass die die Stromstärke der von der Stromspeicher-Einheit 60 abgegebenen Stromleistung nicht die zulässige Stromstärke des Wechselrichters 20 übersteigt.

Fig. 6 zeigt ein Ausführungsbeispiel des Stromspeicher-Systems 1, bei dem die Einrichtung 10 zur Erzeugung primärer elektrischer Leistung eine Photovoltaik-Solaranlage (nicht dargestellt) ist. Im Unterschied zum Ausführungsbeispiel dargestellt in Fig. 2 a, in dem die PV-Module 11, 12 als Steckersolargerät elektrische Leistung für nur einen Haushalt erzeugen, ist in diesem Ausführungsbeispiel die Photovoltaik-Solaranlage dafür geeignet, die erzeugte elektrische Leistung vorrangig und zum größten Teil in das öffentliche Stromnetz einzuspeisen. Die Photovoltaik-Solaranlage weist eine Peak-Leistung pvP auf, die deutlich höher ist als die eines handelsüblichen Steckersolargerätes. Während die PV-Module 11, 12 eines Steckersolargerätes eine Peak-Leistung pvP üblicherweise zwischen 100W und 3000W aufweist, weist eine Photovoltaik-Solaranlage eine Peak-Leistung pvP von einigen 10 kW bis mehreren MW auf. Der Betreiber der Photovoltaik-Solaranlage erhält dafür eine Einspeisevergütung.

In Verbindung mit dem erfindungsgemäßen Stromspeicher-System 1 zur Einspeisung elektrischer Leistung in ein Haushaltstromnetz weist der Wechselrichter 20 wie in allen dargestellten Ausführungsbeispielen eine maximale Ausgangsleistung eP von 600W auf. Von der Photovoltaik-Solaranlage wird im Betrieb elektrische Leistung zur Aufladung der Stromspeicher-Einheit 60 abgezweigt und in die Stromspeicher-Einheit 60 geleitet. Die Steuerung 50 regelt auf Grundlage der erfassten Bezugs- und/oder der Verbrauchsstromleistung des Haushaltstromnetzes über einen DC/DC-Regler die Stromspeicher-Einheit 60 derart, dass die Stromspeicher-Einheit 60 eine derartige Stromleistung als Gleichstrom DC an den Wechselrichter 20 abgibt, dass die Bezugs- und/oder die Verbrauchsstromleistung des Haushaltstromnetzes mit einem Takt von 1 Sekunde vollständig gedeckt ist. Der Wechselrichter 20 wandelt den Gleichstrom DC der Stromspeicher-Einheit 60 in einen Wechselstrom AC (in Deutschland mit 230V) um, über den mit dem Wechselrichter 20 verbundenen Anschlussstecker 30 wird der Wechselstrom AC in die Standardhaushaltssteckdose 100 in das Haushaltsstromnetz eingespeist.

Die Stromspeicher-Einheit 60 weist ebenfalls (s. Fig. 5) neben dem Stromspeicher 61 Regler 62 und Wandler 63 auf. Der Regler 62 regelt gesteuert durch die Steuerung 50, wie viel der von einer Einrichtung 10 zur Erzeugung primärer elektrischer Leistung, die mit der Stromspeicher-Einheit 60 über eine Gleichstromleitung DC verbunden ist, erzeugten elektrischen Leistung in der Stromspeicher-Einheit 60 gespeichert und/oder optional an den Wechselrichter 20 abgegeben wird. Der Wandler 63 wandelt die von einer Einrichtung 10 zur Erzeugung primärer elektrischer Leistung erzeugte elektrische Leistung derart, dass die die Stromstärke der von der Stromspeicher-Einheit 60 abgegebenen Stromleistung nicht die zulässige Stromstärke des Wechselrichters 20 übersteigt.

Während des Betriebes des Stromspeicher-Systems 1 erfasst die Stromleistungsmesseinheit 40 mittels des Stromleistungsmessgerätes 41 die von der Einrichtung 10 zur Erzeugung primärer elektrischer Leistung (Photovoltaik-Solaranlage) abgezweigte elektrische Leistung fortlaufend im Takt von 1 Sekunde und sendet diese Daten an die Steuerung 50. Mittels einer auf der Steuerung 50 angeordneten App wird der Strompreis der abgezweigten elektrischen Leistung berechnet und mit der Einspeisevergütung der Photovoltaik-Solaranlage verrechnet.

### BEZUGSZEICHENLISTE

- 1: Steckersolargerät
- 10: Einrichtung zur Erzeugung von primärer elektrischer Leistung
- 11, 12: PV-Modul
- 20: Wechselrichter
- 21: Gleichrichter
- 30: Anschlussstecker
- 40: Stromleistungsmesseinheit
- 41, 42: Stromleistungsmessgerät
- 50: Steuerung
- 51: Zweite Steuerung
- 60: Stromspeicher-Einheit
- 61: Stromspeicher (aufladbar)
- 62: Regler
- 63: Wandler
- 100: Anschluss des Haushaltsstromnetzes / Standardhaushaltssteckdose
- 101: Stromzähler des Haushaltsstromnetzes
- 102: Sicherung des Haushaltsstromnetzes
- 200: Mobiles Endgerät
- AC: Wechselstrom
- DC: Gleichstrom

## Patentansprüche

1. Verfahren zum Betrieb eines Stromspeicher-Systems (1) zur Einspeisung von elektrischer Leistung in ein Haushaltsstromnetz mit den Verfahrensschritten:
• Speichern einer Stromleistung in einer Stromspeicher-Einheit (60),
• Messen der aktuellen Bezugs- und/oder des Verbrauchsstromleistung des Haushaltstromnetzes und
• Einspeisen einer Stromleistung aus der Stromspeicher-Einheit (60) über einen Wechselrichter (20),
**dadurch gekennzeichnet, dass**
die Menge der eingespeisten Stromleistung mit der gemessenen Bezug- und/oder Verbrauchsstromleistung korrespondiert.

2. Verfahren zum Betrieb eines Stromspeicher-Systems (1) zur Einspeisung von elektrischer Leistung in ein Haushaltsstromnetz nach Anspruch 1,
**dadurch gekennzeichnet, dass**
die aktuelle Bezug- und oder Verbrauchsstromleistung mit einer Stromleistungsmesseinheit (40) gemessen wird,
wobei die Stromleistungsmesseinheit (40) mehrere Stromleistungsmessgeräte (41, 42) aufweist,
wobei das Stromleistungsmessgerät (41) derart im Haushaltsstromnetz angeordnet und/oder mit dem Haushaltsstromnetz gekoppelt ist, dass das Stromleistungsmessgerät (41) den gesamten Stromleistungsverbrauch und/oder den vollständigen Stromleistungsbedarf des Haushaltes ermittelt,
wobei das Stromleistungsmessgerät (41, 42) an einem Stromzähler (102) und/oder zwischen dem Stromzähler (102) und einer Sicherung (101) des Haushaltsstromnetzes zur Erfassung des Stromleistungsverbrauchs und/oder des Stromleistungsbedarfs des Haushaltsstromnetzes angeordnet ist.

3. Verfahren zum Betrieb eines Stromspeicher-Systems (1) zur Einspeisung von elektrischer Leistung in ein Haushaltsstromnetz nach einem oder mehreren der vorhergehenden Ansprüche,
**dadurch gekennzeichnet, dass**
die eingespeiste Stromleistung über dem aktuellen gesamten Stromleistungsverbrauch und/oder dem aktuellen vollständigen Stromleistungsbedarf des Haushaltes liegt.

4. Verfahren zum Betrieb eines Stromspeicher-Systems (1) zur Einspeisung von elektrischer Leistung in ein Haushaltsstromnetz nach einem oder mehreren der vorhergehenden Ansprüche,
**dadurch gekennzeichnet, dass**
die maximale Ausgangsleistung eP des Wechselrichters (20) kleiner ist als die Peak-Leistung pvP der eingespeicherten Stromleistung.

5. Verfahren zum Betrieb eines Stromspeicher-Systems (1) zur Einspeisung von elektrischer Leistung in ein Haushaltsstromnetz nach einem oder mehreren der vorhergehenden Ansprüche,
**dadurch gekennzeichnet, dass**
das Stromspeicher-System (1) einen Anschlussstecker (30) aufweist,
wobei der Anschlussstecker (30) geeignet ist, über eine Standardhaushaltssteckdose (100) einen direkten Anschluss an ein Haushaltsstromnetz herzustellen, wobei der Anschlussstecker (30) ein Stecker aus der Gruppe Stecker-Typ A (NEMA 1-15, 2-polig),), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1) und/oder Wieland-Stecker ist.

6. Verfahren zum Betrieb eines Stromspeicher-Systems (1) zur Einspeisung von elektrischer Leistung in ein Haushaltsstromnetz nach einem oder mehreren der vorhergehenden Ansprüche,
**dadurch gekennzeichnet, dass**
die Stromspeicher-Einheit (60) einen Stromspeicher (61) mit einer Speicherkapazität C mit C >2,5kWh, bevorzugt mit C > 3kWh und besonders bevorzugt mit C > 4 kWh aufweist,
wobei die Stromspeicher-Einheit (60) einen Regler (62) aufweist,
wobei der Regler (62) die von dem Stromspeicher (61) abgebbare elektrische Leistung regelt,
wobei die Stromspeicher-Einheit (60) einen Wandler (63) aufweist,
wobei der Wandler (63) die Stromstärke der von der Stromspeicher-Einheit (60) abgegebenen Stromleistung wandelt.

7. Verfahren zum Betrieb eines Stromspeicher-Systems (1) zur Einspeisung von elektrischer Leistung in ein Haushaltsstromnetz nach einem oder mehreren der vorhergehenden Ansprüche,
**dadurch gekennzeichnet, dass**
die durch das Stromspeicher-System (1) in das Haushaltsstromnetz eingespeiste Stromleistung durch eine Steuerung (50) gesteuert wird,
wobei die Steuerung (50) mit dem Stromleistungsmessgerät (41) gekoppelt ist,
wobei die Steuerung (50) die durch das Stromleistungsmessgerät (41) erfassten Daten mit weiterverarbeitet,
wobei die Steuerung (50) mit der Stromspeicher-Einheit (60) gekoppelt ist,
wobei die Steuerung (50) die von der Stromspeicher-Einheit (60) abgebbare Stromleistung steuert.

8. Stromspeicher-System (1) zur Einspeisung von elektrischer Leistung in ein Haushaltsstromnetz umfassend
• eine Stromspeicher-Einheit (60),
• einen Wechselrichter (20),
• einen Anschlussstecker (30),
• eine Stromleistungsmesseinheit (40) und
• eine Steuerung (50),
wobei die Stromleistungsmesseinheit (40) dafür vorgesehen und dafür geeignet ist, den gesamten Stromleistungsverbrauch und/oder den vollständigen Stromleistungsbedarf des Haushaltes zu ermitteln.

9. Stromspeicher-System (1) zur Einspeisung von elektrischer Leistung in ein Haushaltsstromnetz nach Anspruch 8,
**dadurch gekennzeichnet, dass**
die Stromleistungsmesseinheit (40) ein Stromleistungsmessgerät (41, 42) aufweist,
wobei die Stromleistungsmesseinheit (40) mehrere Stromleistungsmessgeräte (41, 42) aufweist,
wobei die Stromleistungsmesseinheit (40) derart mit einem Haushaltsstromnetz koppelbar ist, dass mit einem Stromleistungsmessgerät (41, 42) der Stromleistungsmesseinheit (40) der vollständige Stromleistungsverbrauch des Haushaltes und/oder den vollständige Stromleistungsbedarf des Haushaltes erfassbar ist,
wobei das Stromleistungsmessgerät (41,42) an einem Stromzähler (101) und/oder zwischen dem Stromzähler (101) und einer Sicherung (102) des Haushaltsstromnetzes zur Erfassung des Stromleistungsverbrauchs und/oder des Stromleistungsbedarfs des Haushaltsstromnetzes angeordnet ist.

10. Stromspeicher-System (1) zur Einspeisung von elektrischer Leistung in ein Haushaltsstromnetz nach Anspruch 8 oder 9,
**dadurch gekennzeichnet, dass**
der Wechselrichter (20) eine Ausgangsleistung eP mit eP < 1800W bevorzugt eP < 800W besonders bevorzugt eP < 600W aufweist.

11. Stromspeicher-System (1) zur Einspeisung von elektrischer Leistung in ein Haushaltsstromnetz nach einem oder mehreren der Ansprüche 8 bis 10,
**dadurch gekennzeichnet, dass**
der Anschlussstecker (30) geeignet ist, über eine Standardhaushaltssteckdose (100) einen direkten Anschluss an ein Haushaltsstromnetz herzustellen,
wobei der Anschlussstecker (30) ein Stecker aus der Gruppe Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1) und/oder Wieland-Stecker ist.

12. Stromspeicher-System (1) zur Einspeisung von elektrischer Leistung in ein Haushaltsstromnetz nach einem oder mehreren der Ansprüche 8 bis 11,
**dadurch gekennzeichnet, dass**
das Stromspeicher-System (1) eine Stromspeicher-Einheit (60) aufweist,
wobei die Stromspeicher-Einheit (60) einen Stromspeicher (61) mit einer Speicherkapazität C mit C >2,5kWh, bevorzugt mit C > 3kWh und besonders bevorzugt mit C > 4 kWh aufweist,

13. Stromspeicher-System (1) zur Einspeisung von elektrischer Leistung in ein Haushaltsstromnetz nach einem oder mehreren der Ansprüche 8 bis 12,
**dadurch gekennzeichnet, dass**
die Stromspeicher-Einheit (60) einen Regler (62) aufweist,
wobei mit dem Regler (62) die von der Stromspeicher-Einheit (60) abgebbare elektrische Leistung regelbar ist,
wobei die Stromspeicher-Einheit (60) einen Wandler (63) aufweist,
wobei durch den Wandler (63) die Stromstärke der von der Stromspeicher-Einheit (60) abgegebenen Stromleistung wandelbar ist.

14. Stromspeicher-System (1) zur Einspeisung von elektrischer Leistung in ein Haushaltsstromnetz nach einem oder mehreren der Ansprüche 8 bis 13,
**dadurch gekennzeichnet, dass**
das Stromspeicher-System (1) eine Steuerung (50) aufweist,
wobei die Steuerung (50) mit der Stromleistungsmesseinheit (40) gekoppelt ist,
wobei die durch die Stromleistungsmesseinheit (40) erfassten Daten mit der Steuerung (50) weiter verarbeitbar sind,
wobei die Steuerung (50) mit der Stromspeicher-Einheit (60) gekoppelt ist,
wobei durch die Steuerung (50) die von der Stromspeicher-Einheit (60) abgebbare Stromleistung steuerbar ist.

15. Stromspeicher-System (1) zur Einspeisung von elektrischer Leistung in ein Haushaltsstromnetz nach einem oder mehreren der Ansprüche 8 bis 14,
**dadurch gekennzeichnet, dass**
das Stromspeicher-System (1) dafür geeignet und dafür vorgesehen ist eine Stromleistung in das Haushaltsstromnetz einzuspeisen, die über dem aktuellen gesamten Stromleistungsverbrauch und/oder dem aktuellen vollständigen Stromleistungs-bedarf des Haushaltes liegt.
